# EUROPÄISCHE PATENTSCHRIFT

(11) **EP 0 576 821 B1**
(45) Veröffentlichungstag und Bekanntmachung des Hinweises auf die Patenterteilung: **05.03.1997**
(21) Anmeldenummer: 93108133.5
(22) Anmeldetag: 19.05.1993
(51) Int. Cl.: G07F 11/24, B65G 59/06

(54) **Vorrichtung zum automatischen Entnehmen von liegend gestapeltem, im wesentlichen zylindrisch geformtem Stückgut**
Device for taking out automatically articles which are piled in a lying position and which are of essentially cylindrical shape
Dispositif pour le prélèvement automatique d'objets empilés de façon couchée et de forme essentiellement cylindrique

(30) Priorität: 30.06.1992 DE 9208747 U
(43) Veröffentlichungstag der Anmeldung: 05.01.1994
(73) Patentinhaber: P+P MATERIALFLUSS-SYSTEME GmbH, 90411 Nürnberg (DE)
(72) Erfinder: Wiltsche, Norbert, Dipl.-Ing., W-8228 Freilassing (DE)
(74) Vertreter: Hanke, Hilmar

(56) Entgegenhaltungen:
- EP-A- 0 237 628
- US-A- 2 215 642
- US-A- 2 405 891
- US-A- 4 354 614

## Beschreibung

Die Erfindung betrifft eine Vorrichtung zum automatischen Entnehmen von liegend gestapeltem, im wesentlichen zylindrisch geformtem Stückgut mit den Merkmalen des Oberbegriffs des Anspruchs 1.

Aus DE 39 27 713 A1 ist eine Entnahmevorrichtung der vorgenannten Art bekannt, bei der der Ausgeber eines Sortenmagazins aus zwei übereinander angeordneten horizontalen Walzen besteht, die im Bereich der vertikalen Seitenwand des Stapels exzentrisch angelenkt sind und sich bei Drehung wechselweise in das Sortenmagazin hinein- und wieder herausbewegen. Im Sortenmagazin befindliches Stückgut wird auf diese Weise einzeln von der Unterseite des Magazins ausgegeben. Die Vorrichtung ist vergleichsweise kompliziert und inkompakt getroffen. Insbesondere benötigt sie viel Seitenraum aufgrund der exzentrischen Lagerung der Walzen, welcher bei einem benachbarten Sortenmagazin verlorengeht. Viele nebeneinander gereihte Sortenmagazine benötigen daher viel Einbauraum, so daß die gesamte Kommissionieranlage einer bestimmten Kapazität entsprechend viel Platz benötigt.

Eine Vorrichtung mit den Merkmalen des Oberbegriffs des Anspruchs 1 ist aus der EP-A-0 237 628 bekannt.

Aufgabe der Erfindung ist die Schaffung einer Vorrichtung der eingangs genannten Art, welche sehr einfach und kompakt aufgebaut ist und gleichwohl zuverlässig betrieben werden kann.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 14.

Wesen der Erfindung ist die Ausbildung eines im wesentlichen halbzylindrischen, schalenförmigen Greif-/Halteteils eines Ausgebers an stapelunterster seitlicher Stelle, welches um eine stapelnahe, im wesentlichen horizontale, zur Achse des zylindrischen Stückgutes im wesentlichen parallele Achse innerhalb eines bestimmten Schwenkwinkels verschwenkt werden kann, dergestalt, daß das stapelunterste Stückgut mit der konkaven Innenfläche des Greif-/Halteteils in einen formschlüssigen Eingriff und in der abgesenkten Schwenkendstellung des Greif-/Halteteils freigegeben werden kann, während der oberste Rand des Greif-/Halteteils das unmittelbar dem freigegebenen Stapelgut benachbarte Stückgut geringfügig mantelseitig untergreifen kann, also in den Stapel seitlich hineinragt. In der oberen Schwenkendstellung wird der mantelseitige Untergriff des gehaltenen Stückgutes gelöst, indem der oberste Rand aufgrund der Schwenkbewegung wieder aus dem Stapel seitlich entfernt wird. Gleichzeitig schwenkt der untere Rand des Greif-/Halteteils in den Stapelbereich ein, so daß das nunmehr nicht mehr festgehaltene Stückgut formschlüssig wieder in der konkaven Innenfläche des Greif-/Halteteils aufgenommen werden kann. Bei einer Auf- und Abwärts- sowie seitlichen Hin- und Herbewegung des Greif-/Halteteils werden somit mit Hilfe eines einzigen Elements im Sortenmagazin angeordnete Stückgut-Teile einzeln nach unten abgeführt. Bei vorgenanntem Stand der Technik werden demgegenüber zwei separate exzentrische Halteteile benötigt.

Die Anordnung ist so getroffen, daß der oberste Rand des Greif-/Halteteils nur minimal in den Stückgut-Stapel seitlich hineinreichen kann, während der untere Rand des Greif-/Halteteils eine größere Verschwenkbewegung in den Stapel erfährt.

Eine besonders vorteilhafte Weiterbildung der Erfindung kennzeichnet sich dadurch, daß zwei benachbarte Sortenmagazine mit jeweils einem unterseitigen Ausgeber vorgesehen sind, wobei beide Ausgeber die gleiche Schwenkachse besitzen, die beiden konvexen Flächen der Halte-/Greifteile aufeinander zu gerichtet sind und beide Ausgeber miteinander starr verbunden sind. Dadurch können zwei Sortenmagazine noch näher nebeneinander angeordnet werden. Gleichwohl wird Stückgut sehr schnell wechselweise an stapelunterster Stelle freigegeben. Die Vorrichtung wird gewissermaßen nach dem "Pendeluhr"-Prinzip betrieben. Unter Umständen genügt selbst das auflastende Gewicht des Stückgut-Stapels, um die "Pendeluhr" anzutreiben. Soll kein Stückgut abgeführt werden, wird die "Pendeluhr" durch ein Halteorgan arretiert.

In alternativer Ausführung wird jedoch der Ausgeber in seiner Grundvariante sowie der vorgenannte Doppel-Ausgeber mittels Motor angetrieben, insbesondere durch einen Getriebemotor mit einer Kulissenführung. Auch kommt ein pneumatischer Kolben-Zylinder-Antrieb oder ein Elektromagnet als Antrieb in Frage.

Vorgenannte Antriebsmittel können einseitig betrieben sein, d.h. nur in einer einzigen Richtung angetrieben sein. Für die Rückwärtsschwenkbewegung kann dann beispielsweise eine Rückstellfeder vorgesehen sein, welche durch Federkraft das Greif-/Halteteil wieder zurückschwenkt.

Zweckmäßigerweise können Sensoren zur Kontrolle des Ausgabevorgangs und für die Füllstandsmessung des Sortenmagazins vorgesehen sein.

Selbstverständlich ist die Erfindung auch anwendbar bei kugelförmigen oder sonstigen rotationssymmetrischen Produkten. Entsprechend den zu kommissionierenden Produkten sind auch die Halbschalen der Ausgeber geformt, die sich um einen bestimmten Winkel hin- und herbewegen lassen. Bei einem Doppel-Ausgeber, welcher nach dem Pendeluhr-Prinzip arbeitet, lassen sich Ausgabegeschwindigkeiten im Bereich der normalen quaderförmigen Produkte erreichen. Ein einfaches Magazin mit nur einer einzigen Halbschale eines Ausgebers eignet sich insbesondere für größere Produkte im Langsamdreherbereich. Die Erfindung ist insbesondere deshalb bedeutungsvoll, weil gerade durch neue amtliche Verpackungsverordnungen zunehmend Herstellerfirmen auf kartonförmige Umverpackung verzichten und das Produkt rotationssymmetrisch anbieten.

Die Erfindung wird nachfolgend anhand eines Ausführungsbeispiels unter Bezugnahme auf die beigefügte Zeichnung näher erläutert; es zeigen:

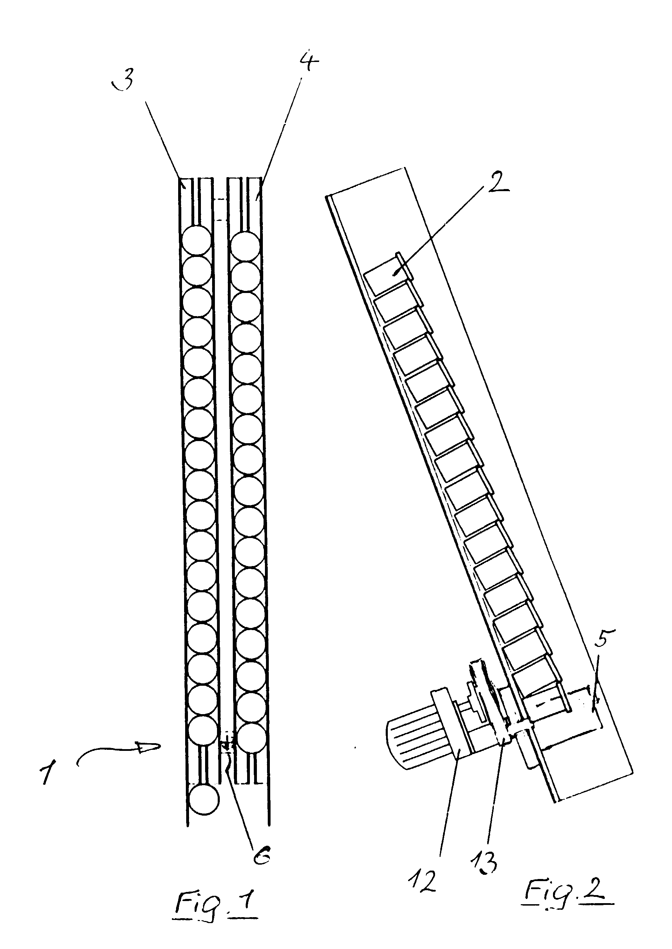

- Fig. 1: die Entnahmevorrichtung mit zwei Sortenmagazinen in einer schematischen Draufsicht,
- Fig. 2: die Vorrichtung nach Fig. 1 in einer schematischen Seitenansicht, und
- Fig. 3: der untere Teil der Entnahmevorrichtung nach Fig.1 in größerer Einzelheit.

Gemäß Zeichnung umfaßt eine Vorrichtung (1) zum automatischen Entfernen von liegend gestapeltem, im wesentlichen zylindrisch geformtem Stückgut 2 zwei schachtartige räumlich leicht geneigte, parallel zueinander stehende Sortenmagazine 3, 4, in welchen das Stückgut einer Sorte gestapelt ist.

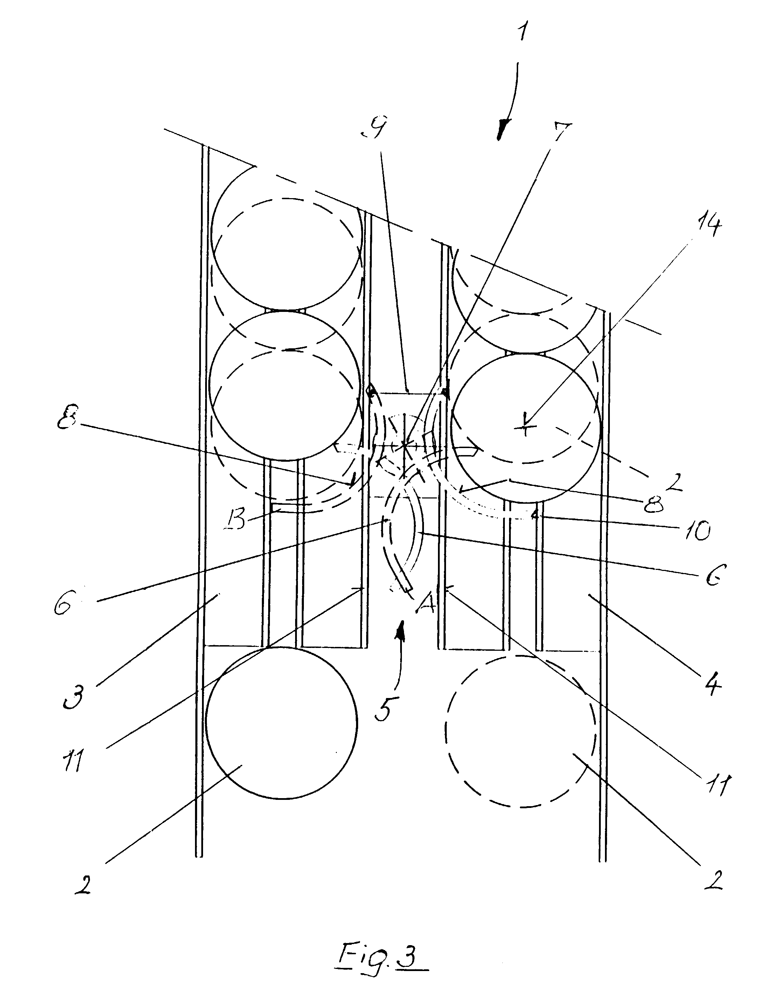

Im unteren Bereich beider Sortenmagazine befinden sich zwei Ausgeber 5, welche in größerer Einzelheit in Fig.3 dargestellt sind. Jeder Ausgeber ist einem Sortenmagazin zugeordnet.

Insbesondere sind beide Ausgeber 5 miteinander starr gekoppelt und um eine gemeinsame Schwenkachse 7 in einem Winkelbereich von nahezu 90° hin- und herverschwenkbar. Die gemeinsame Schwenkachse 7 verläuft in etwa parallel zur Achse des zylindrischen Stückgutes und ist zwischen den beiden benachbarten Sortenmagazinen 3, 4 gelegen. Sie befindet sich an höherer Stelle des sog. "Doppel-Ausgebers", welcher zwei im wesentlichen halbzylindrische schalenförmige, konvex zueinander angeordnete Greif-/Halteteile 6 besitzt, d.h. an einer Stelle, an der der oberste Rand 9 einer Halbschale näher an der Schwenkachse 7 liegt als der zugehörige untere Rand 10 des gleichen Greif-/Halteteils.

Die Schalenform ist so getroffen, daß diese in etwa dem Zylindermantel des Stückguts 2 entspricht.

Die Gesamtanordnung ist so getroffen, daß das stapelunterste Stückgut eines Sortenmagazins mit der konkaven Innenfläche 8 eines Greif-/Halteteils 6 in einen formschlüssigen Eingriff gebracht und in einer abgesenkten Schwenkendstellung A einem Förderband oder dergl. zugeführt werden kann, während in dieser abgesenkten Schwenkendstellung der oberste Rand 9 des gleichen Greif-/Halteteils 6 das unmittelbar darüber gelegene Stückgut des gleichen Sortenmagazins mantelseitig geringfügig untergreift, d.h. geringfügig in den Wirkraum des Stapels des zugehörigen Sortenmagazins hineinreicht. Wird das gleiche Greif-/Halteteil 6 um ca. 90° nach oben in die obere Schwenkendstellung B geschwenkt, löst sich der mantelseitige Untergriff des Stückguts bei gleichzeitiger formschlüssiger Aufnahme dieses Stückgutes in der konkaven Innenfläche 8, die nun abermals bei einer Abwärtsschwenkbewegung dieses letztgenannte Stückgut wieder freigibt, etc..

Entsprechend wird die andere Halbschale, d.h. das andere Greif-/Halteteil 6 des "Doppel-Ausgebers" des anderen Sortenmagazins betrieben, und zwar wechselweise im Gegentakt nach dem sog. Pendeluhr-Prinzip, da beide Halbschalen starr miteinander verbunden sind.

Der Doppel-Ausgeber ist durch einen Antriebsmotor 12 in Form eines Getriebemotors gemäß Fig. 2 angetrieben, welcher eine Kulissenführung 13 besitzt. Der Getriebemotor ist ein sich drehender Motor mit einem Kurbelgetriebe, dessen Kurbelstange in einer Langloch-Kulissenführung eines Schwenkteils geführt ist, welches die Hin- und Herbewegung der Halbschalen auslöst.

## Patentansprüche

1. Vorrichtung (1) zum automatischen Entnehmen von liegend gestapeltem, im wesentlichen zylindrisch geformtem Stückgut, wie Flaschen, Dosen oder dergl., mit einem schaftartigen vertikalen bis räumlich geneigten Sortenmagazin, in welchem das Stückgut einer Sorte gestapelt ist und mit einem Ausgeber für das Stückgut, der am unteren Ende des Sortenmagazins angeordnet ist und ein Greif-/Halteteil (6) umfaßt, welches um eine stapelnahe, im wesentlichen horizontale, zur Achse (14) des zylindrischen Stückguts (2) im wesentlichen parallele Achse (7) verschwenkbar ausgebildet ist, wobei das stapelunterste Stückgut (2) mit der konkaven Innenfläche (8) des Greif-/Halteteils (6) in einen formschlüssigen Eingriff bringbar und in einer Schwenkendstellung (A) des Greif-/Halteteils freigebbar ist, während in dieser Schwenkendstellung (A) der oberste Rand (9) des Greif-/Halteteils (6) das benachbarte Stückgut (2) untergreift, und in der anderen Schwenkendstellung (B) der Untergriff des benachbarten Stückguts bei formschlüssiger Aufnahme dieses Stückgutes in der konkaven Innenfläche (8) lösbar ist,
dadurch gekennzeichnet,
daß das Greif-/Halteteil (6) eine im wesentlichen halbzylindrische Schale ist, deren oberster Rand (9) in der Schwenkendstellung (A) das benachbarte Stückgut (2) nur geringfügig mantelseitig untergreift, und eine hochgelegene Schwenkachse (7) aufweist, bei der der Abstand zwischen Schwenkachse (7) und obersten Rand (9) der Schale kleiner ist als der Abstand zwischen Schwenkachse (7) und unterstem Schalenrand (10)."

2. Vorrichtung nach Anspruch 1,
dadurch gekennzeichnet,
daß zwei benachbarte Sortenmagazine (3, 4) mit jeweils einem unterseitigen Ausgeber (5) vorgesehen sind, wobei beide Ausgeber (5) die gleiche Schwenkachse (7) besitzen, die beiden konvexen Flächen der Halte-/Greifteile (6) aufeinander zu gerichtet sind und beide Ausgeber miteinander starr verbunden sind.

3. Vorrichtung nach einem der Ansprüche 1 oder 2
dadurch gekennzeichnet,
daß das Greif-/Halteteil (6) des Ausgebers (5) einen maximalen Verschwenkbereich von ca. 90° besitzt.

4. Vorrichtung nach einem der Ansprüche 1 bis 3,
dadurch gekennzeichnet,
daß in der abgesenkten Schwenkendstellung (A) des Ausgebers (5) der unterste Greif-/Halteteil-Rand (10) in Höhe bzw. in der Breite des seitlichen vertikalen Stapelrandes (11) oder geringfügig außerhalb dieses seitlichen Stapelrandes (11) gelegen ist.

5. Vorrichtung nach einem der Ansprüche 1 bis 4,
dadurch gekennzeichnet,
daß in der oberen Schwenkendstellung (B) des Ausgebers (5) der oberste Greif-/Halteteil-Rand (9) in Höhe bzw. in der Breite des seitlichen vertikalen Stapelrands (11) oder geringfügig außerhalb dieses seitlichen Stapelrandes gelegen ist.

6. Vorrichtung nach einem der Ansprüche 1 bis 5,
dadurch gekennzeichnet,
daß der Ausgeber (5) einen Antriebsmotor (12) aufweist.

7. Vorrichtung nach Anspruch 6,
dadurch gekennzeichnet,
daß der Antriebsmotor (12) ein Getriebemotor mit einer Kulissenführung (13) ist.

8. Vorrichtung nach einem der Ansprüche 1 bis 5,
dadurch gekennzeichnet,
daß der Ausgeber (5) einen Pneumatikzylinder-Antrieb aufweist.

9. Vorrichtung nach einem der Ansprüche 1 bis 5,
dadurch gekennzeichnet,
daß der Ausgeber (5) einen Elektromagnet-Antrieb aufweist.

10. Vorrichtung nach einem der Ansprüche 1 bis 9,
dadurch gekennzeichnet,
daß der Antriebsmotor bzw. der Pneumatikzylinder-Antrieb/Elektromagnet-Antrieb einen Wechselantrieb besitzt, d.h. in beiden Antriebsrichtungen wechselweise betrieben werden kann.

11. Vorrichtung nach einem der Ansprüche 1 bis 9,
dadurch gekennzeichnet,
daß der Antriebsmotor bzw. der Pneumatikzylinder-Antrieb/Elektromagnet-Antrieb einen einseitigen Antrieb mit Federrückstelltrieb aufweisen, d.h. nur in einer Richtung angetrieben und durch Federkraft in die andere Richtung wieder zurückgestellt werden kann.

12. Vorrichtung nach einem der Ansprüche 1 bis 11,
dadurch gekennzeichnet,
daß Sensoren zur Kontrolle des Ausgabevorgangs eines stapeluntersten Stückguts (2) vorgesehen sind.

13. Vorrichtung nach einem der Ansprüche 1 bis 12,
dadurch gekennzeichnet,
daß Sensoren für die Füllstandsmessung des Sortenmagazins (3, 4) vorgesehen sind.

14. Vorrichtung nach einem der Ansprüche 2 bis 5, 12 und 13,
dadurch gekennzeichnet,
daß der Doppel-Ausgeber (5) durch das Gewicht des in den beiden benachbarten Sortenmagazinen (3, 4) gestapelten Stückguts (2) wechselseitig antreibbar ausgebildet ist.

## Claims

1. Mechanism (1) for automated picking of basically cylindrical items as for example bottles, cans or similar, horizontally stacked one above the other, with a shaft-type vertical, slightly spacially inclined product magazine, in which the items of one product type are stacked, and fitted with a release unit for the items at the bottom of the product magazine including a gripping-/retaining unit (6) designed to swivel around a basically horizontal axis (7) close to the stack, parallel to the axis (14) of the cylindrical items (2) working in a way that the bottom item of the stack (2) can be retained in locked position by means of the concave inner surface (8) of the gripping-/retaining unit (6) and can be released when in down swivel end position (A) ofthe gripping-/retaining unit (6) while in this swivel end position (A) the very top edge (9) of the gripping-/retaining unit (6) slightly supports the adjacent item (2) and in the other swivel end position (B) the support of the adjacent item is released through possitive reception ofthis item in the concave inner surface (8),
characterised through the feature that
the gripping-/retaining unit (6) basically has the form of a semi-cylindrical bowl whose very top edge (9) supports only slightly the adjacent item (2) when being in swivelend position (A) and which is designed to have a swivel axis (7) positioned on top where the distance between swivelling axis (7) and very top edge (9) of the bowl is smaller than the distance between swivelling axis (7) and the bottom edge of the bowl (10).

2. Mechanism according to claim 1,
characterised through the feature that
the mechanism is designed to have two neighbouring product magazines (3, 4) each one with a release unit (5) at the bottom, both release units (5) having the same swivelling axis (7), the two convex surfaces of the gripping-/retaining units (6) looking on to each other and the two release units being rigidly connected to each other.

3. Mechanism according to one of the claims 1 or 2,
characterised through the feature that
the gripping-/retaining mechanism (6) of the release unit (5) has a maximum swivelling range of approximately 90°.

4. Mechanism according to one of the claims 1 to 3,
characterised through the feature that
in down swivel end position (A) of the release unit (5) the bottom edge (10) of the gripping-/retaining unit is at the height or respectively in the width of the lateral, vertical edge of the stack (11) or slightly outside this lateral edge of the stack (11).

5. Mechanism according to one of the claims 1 to 4,
characterised through the feature that
in top swivel end position (B) of the release unit (5) the very top edge (9) of the gripping/retaining unit is at the height or respectively in the width of the lateral, vertical edge of the stack (11) or slightly outside this lateral edge of the stack (11).

6. Mechanism according to one of the claims 1 to 5,
characterised through the feature that
the release unit (5) is fitted with a drive motor (12).

7. Mechanism according to claim 6,
characterised through the feature that
the drive motor (12) is a geared motor with guiding for the shifting gate.

8. Mechanism according to one of the claims 1 to 5,
characterised through the feature that
the release unit (5) has a pneumatic cylinder drive.

9. Mechanism according to one of the claims 1 to 5,
characterised through the feature that
the release unit (5) has an electromagnet drive.

10. Mechanism according to one ofthe claims 1 to 9,
characterised through the feature that
the drive motor or respectively the the pneumatic cylinder drive / electromagnet drive are alternating drive mechanisms which means that the units can be driven in both directions in a two-way alternating mode.

11. Mechanism according to one of the claims 1 to 9,
characterised through the feature that
the drive motor or respectively the pneumatic cylinder drive / electromagnet drive dispose of a one-way drive mechanism with spring-return device which means that the units will only be driven in one way and that they can be reset again to the other direction by spring power.

12. Mechanism according to one of the claims 1 to 11,
characterised through the feature that
the mechanism is designed to have sensors to check the release of the bottom item of the stack (2).

13. Mechanism according to one ofthe claims 1 to 12,
characterised through the feature that
the mechanism is designed to have sensors for checking the filling level of the product magazines (3, 4).

14. Mechanism according to one ofthe claims 1 to 5, 12 and 13,
characterised through the feature that
the double-release unit (5) is designed in a way the it can be alternately driven in two directions by the weight of the items (2) stacked in the two neighbouring product magazines (3, 4).

## Revendications

1. Dispositf (1) pour la prise automatique de marchandises à la pièce de forme essentiellement cylindrique, empilées horizontalement comme par example bouteilles, boîtes ou produits similaires, avec un magasin de produit ayant la forme d'un fût en position verticale ou légèrement incliné dans l'espace, dans lequel les marchandises à la pièce d'un type de produit sont empilées et avec une unité de sortie pour les marchandises à la pièce qui est située à l'extrémité inférieure du magasin de produits, l'unité de sortie étant équipée avec un dispositif de prise et soutien (6) conçue de façon à ce qu'elle soit pivotable autour d'un axe (7) proche à la pile de produits, essentiellement horizontal, en même temps parallèle à l'axe (14) des marchandises à la pièce cylindriques (2), tout l'ensemble fonctionnant selon le principe que la pièce la plus basse dans la pile (2) peut être reçue par la surface intérieure concave (8) du dispositif de prise et soutien (6) et libérée quand le dispositif de prise et soutien (6) est dans une position finale de pivotement en bas (A) et dans cette position finale de pivotement (A) l'extrémité supérieure (9) du dispositif de prise et soutien (6) soutient la pièce (2) voisine, et dans l'autre position finale de pivotement (B) le soutien de la pièce voisine peut être lâché par recevant la pièce dans la surface intérieure (8)
étant marqué par la caractéristique que
le dispositif de prise et soutien (6) est une coupe essentiellement sémi-cylindrique dont l'extrémité supérieure (9) en position finale de pivotement (A) ne soutient la pièce voisine (2) que légèrement et que le dispositif dispose d'un axe de rotation (7) situé en haut dont la distance entre l'axe de rotation (7) et l'extrémité supérieure (9) de la coupe est plus petite que la distance entre l'axe de rotation (7) et l'extrémité inférieure (10).

2. Dispositif selon droit numéro 1,
étant marqué par la caractéristique que
le dispositif est conçu d'avoir deux magasins de produits voisins (3, 4) chacun avec une unité de sortie (5) en dessous, les deux unités de sortie (5) ayant le même axe de rotation (7), les deux surfaces convexes du dispositif de prise et soutien (6) l'un arrangé en face de l'autre et les deux unités de sortie connectées rigidement l'un avec l'autre.

3. Dispositif selon droit numéro 1 ou 2,
étant marqué par la caractéristique que
le dispositif de prise et soutien (6) de l'unité de sortie (5) a un rayon de pivotement maximal d'environ 90°.

4. Dispositif selon un des droits 1 à 3,
étant marqué par la caractéristique qu'
en position finale de pivotement en bas (A) de l'unité de sortie (5) l'extrémité inférieure (10) du dispositif de prise et soutien se trouve à la hauteur ou respectivement à la largeur du bord de la pile (11) laterale verticale ou légèrement en dehors de ce bord de pile laterale.

5. Dispositif selon un des droits 1 à 4,
étant marqué par la caractéristique qu'
en position finale de pivotement en haut (B) de l'unité de sortie (5) l'extrémité supérieure (9) du dispositif de prise et soutien se trouve à la hauteur ou respectivement à la largeur du bord de la pile (11) laterale verticale ou légèrement en dehors de ce bord de pile laterale.

6. Dispositif selon un des droits 1 à 5,
étant marqué par la caractéristique que
l'unité de sortie (5) est équipée avec un moteur d'entraînement (12).

7. Dispositif selon droit numéro 6,
étant marqué par la caractéristique que
le moteur d'entraînement (12) est un moteur à engrenage avec guidage de coulisse (13).

8. Dispositif selon un des droits 1 à 5,
étant marqué par la caractéristique que
l'unité de sortie (5) possède un entraînement par cylindre pneumatique.

9. Dispositif selon un des droits 1 à 5,
étant marqué par la caractéristique que
l'unité de sortie (5) possède un entraînement par électro-aimant.

10. Dispositif selon un des droits 1 à 9,
étant marqué par la caractéristique que
le moteur d'entraînement ou respectivement l'entraînement par cylindre pneumatique / par électro-aimant possèdent un entraînement à changement de direction, c'est-à-dire les entraînements peuvent être opérés alternativement dans les deux directions.

11. Dispositif selon un des droits 1 à 9,
étant marqué par la caractéristique que
le moteur d'entraînement ou respectivement l'entraînement par cylindre pneumatique / par électro-aimant possèdent un entraînement unilatéral avec mechanisme de retour par ressort, c'est-à-dire que les entraînements ne sont opérés que dans une direction et qu'ils peuvent être retournés dans l'autre direction par force de ressort.

12. Dispositif selon un des droits 1 à 11,
étant marqué par la caractéristique que
le dispositif est conçu d'avoir des capteurs pour contrôler le processus de sortie d'une pièce la plus basse dans la pile (2).

13. Dispositif selon un des droits 1 à 12,
étant marqué par la caractéristique que
le dispositif est conçu d'avoir des capteurs pour contrôler le niveau de remplissage du magasin de produits (3, 4).

14. Dispositif selon un des droits 2 à 5, 12 et 13,
étant marqué par la caractéristique que
la double-unité de sortie (5) est conçue de façon à ce qu'elle puisse être entraînée alternativement dans les deux directions par moyen du poids des pièces (2) stockées dans les deux magasins de produits voisins (3, 4).
